# EUROPEAN PATENT APPLICATION

(11) **EP 1 168 195 A2**
(43) Date of publication of application: **02.01.2002**
(21) Application number: 01114755.0
(22) Date of filing: 22.06.2001
(51) Int. Cl.: G06F 17/30

(54) **Information search system**

(30) Priority: 23.06.2000 JP 2000189982
(71) Applicant: NTT DoCoMo, Inc., Tokyo 100-6150 (JP)
(72) Inventor: Sekiguchi, Shunichi, Yamato-shi, Kanagawa 242-0024 (JP); Kawahara, Toshiro, Brookline, MA 02446 (US); Nakamura, Norio, Nagoya-shi, Aichi 464-0077 (JP)
(74) Representative: HOFFMANN - EITLE

(57) **Abstract**

A mobile terminal is provided with an imaging unit for acquiring a plurality of frames of images including a search object and a feature descriptor generating unit for generating a feature descriptor from an image of a search object included in the frames. The mobile terminal transmits the feature descriptor generated by the feature descriptor generating unit to a search server. The search server has a matching processing unit. The matching processing unit searches for a record matching with the feature descriptor received from the mobile terminal from a database of the content server.

## Description

### BACKGROUND ART

### TECHNICAL FIELD OF THE INVENTION

The present invention relates to an information search system.

### DESCRIPTION OF THE RELATED ART

Advances in communications technology and information processing technology have led to broad use of various types of information search systems utilizing networks. In these types of information search systems, the general practice has been for the user to specify a keyword etc. related to the search object and for the search server to search for records matching the keyword from its database and provide the results to the user.

Sometimes, however, the search object may be right in front of the user, but the user might not known the name of the search object and therefore cannot specify a suitable keyword. In such a case, there is the problem that the user cannot transmit a suitable keyword to the information search system and cannot obtain information related to the search object.

### DISCLOSURE OF THE INVENTION

An object of the present invention is to provide an information search system enabling information on a search object to be obtained even when the user cannot specify a suitable keyword etc.

To achieve this object, the present invention provides an information search system comprising a database linking and storing records relating to various search objects and feature descriptors serving as conditions for selection of the same, an image acquiring unit for acquiring an image including a search object, a feature descriptor generating unit for generating a feature descriptor from an image of a search object included in the image acquired by said image acquiring unit, and a matching processing unit for searching for a record relating to a search object matching a feature descriptor generated by said feature descriptor generating unit from said database.

According to this information search system, a feature descriptor of a search object is generated from an acquired image and information is searched for using the feature descriptor as a search key. Therefore, the user can obtain information relating to the search object without knowing the name etc. of the search object.

### BRIEF DESCRIPTION OF THE DRAWINGS

FIG. 1 is a block diagram of the configuration of an information search system according to a first embodiment of the present invention.
FIG. 2 is a block diagram of the configuration of an image encoding unit 102 according to the same embodiment.
FIG. 3 is a view of the configuration of a database according to the same embodiment.
FIG. 4 is a flow chart of the overall operation according to the same embodiment.
FIG. 5 is a flow chart of a first example of imaging and processing for generating a feature descriptor according to the same embodiment.
FIG. 6 is a flow chart of a second example of imaging and processing for generating a feature descriptor according to the same embodiment.
FIG. 7 is a flow chart of a third example of imaging and processing for generating a feature descriptor according to the same embodiment.
FIG. 8 is a flow chart of a fourth example of imaging and processing for generating a feature descriptor according to the same embodiment.
FIGS. 9A and 9B are views explaining processing for determining the contours performed in the same embodiment.
FIGS. 10A and 10B are views explaining processing for object component color regions and processing for generating a spatial arrangement descriptor according to the same embodiment.
FIG. 11 is a flow chart of a first example of matching processing according to the same embodiment.
FIG. 12 is a flow chart of a second example of matching processing according to the same embodiment.
FIG. 13 is a block diagram of the configuration of an information search system according to a second embodiment of the present invention.
FIG. 14 is a block diagram of the configuration of a decoder of a receiver according to the same embodiment.
FIG. 15 is a block diagram of the configuration of an information search system according to a third embodiment of the present invention.
FIG. 16 is a flow chart of the operation according to the same embodiment.
FIG. 17 is a block diagram of the configuration of an information search system according to a fourth embodiment of the present invention.

### DETAILED DESCRIPTION OF THE INVENTION

Below, embodiments of the present invention will be explained with reference to the drawings.

### A. First Embodiment

### (1) Configuration of Embodiment

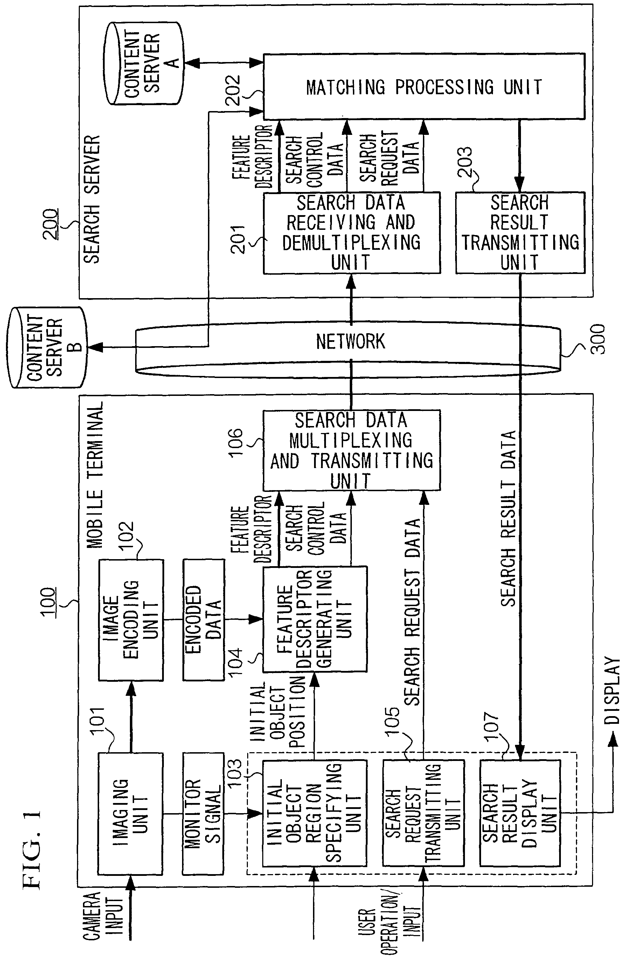

FIG. 1 is a block diagram of the configuration of an information search system according to a first embodiment of the present invention. The information search system searches for a record relating to an object in front of the user and provides the result of the search to the user. As shown in FIG. 1, the information search system is mainly comprised of a mobile terminal 100, a search server 200, a network 300, and a database comprised of a content server A inside the search server 200, a content server B outside of the search server 200, etc.

The mobile terminal 100 is a multimedia-capable mobile terminal having the function of receiving and transmitting sound or pictures with other apparatuses through the network 300. In this mobile terminal 100, an imaging unit 101 and an image encoding unit 102 are used when transmitting an image to another party through the network 300. That is, when transmitting an image from the mobile terminal 100 to another party, the imaging unit 101 obtains a picture of the outside world to be transmitted to another party and outputs image information, while the image encoding unit 102 compresses and encodes the image information to generate encoded data of a low data rate suitable for transmission through the network 300.

Further, the mobile terminal 100 in the present embodiment is provided with the function of searching for information relating to an object in front of the user using a search server 200 in addition to such an image communication function. The information is searched for by generally the following routine in the present embodiment. That is, the mobile terminal 100 acquires image information of a search object in front of the user, generates information indicating a feature of the object from the image information (hereinafter called a "feature descriptor"), and sends it to the search server 200. The search server 200 searches for a record matching the feature descriptor from the content server A, content server B, or other database and returns it to the mobile terminal 100.

In the search for information, the imaging unit 101 in the mobile terminal 100 is used as the unit for acquiring the image data of the search object. The imaging unit 101 obtains an image of the outside world at predetermined time intervals and outputs one frame's worth of image data each time. The image encoding unit 102 is for encoding the image data obtained from the imaging unit 101 in accordance with an encoding algorithm defined in the MPEG-4 (Moving Picture Expert Group Phase 4). In this embodiment, a feature descriptor corresponding to the search object is generated from the data generated in the process of encoding of the image data. One of the feature features of the present embodiment is the effective use of components originally provided in a multimedia-capable mobile terminal for an information search.

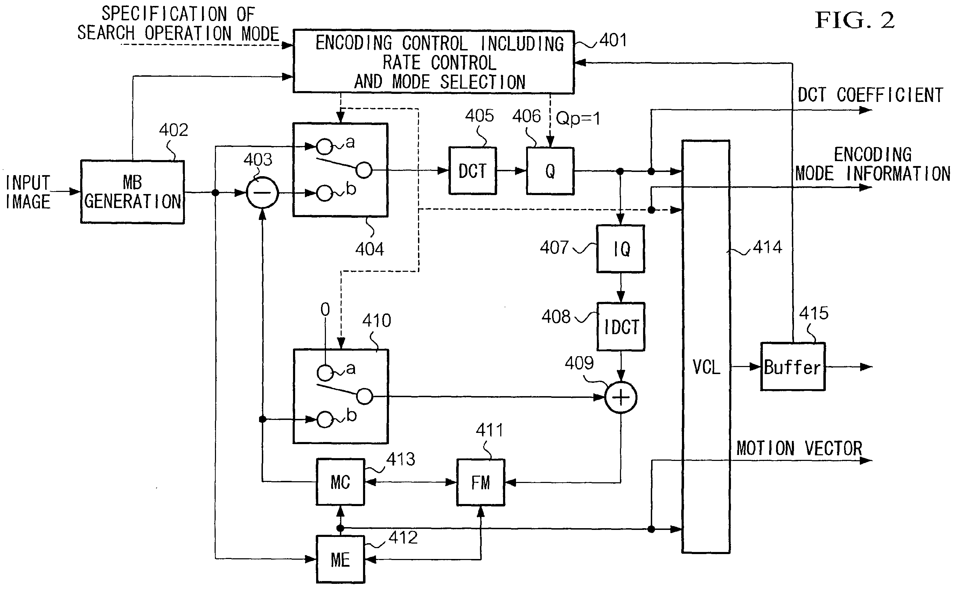

FIG. 2 is a block diagram of the configuration of the image encoding unit 102. In FIG. 2, the encoding control unit 401 generates various types of control information to control the operation of the image encoding unit 102 as a whole. The control information generated by the encoding control unit 401 includes for example encoding mode information and a quantization step Qp. Here, the encoding mode information is information generated for controlling switching between intraframe encoding and interframe predictive encoding. Further, the quantization step Qp is information generated for controlling the amount of encoding of the encoded data output from the image encoding unit 102.

An MB (macroblock) generating unit 402 is successively supplied with a series of frames of image data output from the imaging unit 101. The MB generating unit 402 outputs one frame's worth of image data supplied from the imaging unit 101 divided into 16 x 16 pixel MBs. A subtractor 403 performs subtraction between the MBs and reference images corresponding to the MBs supplied from a later mentioned motion compensating unit 413 and outputs the differential images.

A switch 404 has a contact a and a contact b. The contact a is supplied with the MBs from the MB generating unit 402, while the contact b is supplied with the differential images from the subtractor 403. The switch 404 is switched by the encoding mode information output from the encoding control unit 401 to the contact a side at the time of intraframe encoding and to the contact b side at the time of interframe predictive encoding.

A DCT unit 405 applies DCT (discrete cosine transform), a type of orthogonal transform, to each block obtained by dividing into four the MBs or differential images supplied through the switch 404 and outputs a DCT coefficient matrix. A quantizer 406 quantizes each matrix element (that is, DCT coefficient) of the DCT matrix obtained from the DCT unit 405 in accordance with a quantization step Qp given from the encoding control unit 401 and outputs the quantized DCT coefficient matrix.

An inverse quantizer 407 inversely quantizes the quantized DCT coefficient matrix obtained from the quantizer 406 to restore the original DCT coefficient matrix. An IDCT unit 408 applies inverse DCT to the DCT coefficient matrix output from the inverse quantizer 407 to restore the original MBs (at the time of intraframe encoding) or differential images (at the time of interframe predictive encoding).

An adder 409 is supplied with the original MBs or differential images and the output data of the switch 410. Here, the switch 410 has a contact a and contact b. The contact a is supplied with a fixed value "0", while the contact b is supplied with reference images from the motion compensation unit 413. Further, the switch 410 is switched by the encoding mode information output from the encoding control unit 410 to the contact a side at the time of intraframe encoding, while is switched to the contact b side at the time of interframe predictive encoding. Therefore, the adder 409 outputs the original MBs before DCT at the time of intraframe encoding, while outputs the differential images plus the corresponding reference images, that is, the decoded images of the original MBs, at the time of interframe predictive coding. The frame memory 411 stores decoded images obtained from the adder 409 in this way.

A motion prediction unit 412 searches for a reference image resembling an MB from among the decoded images of the previous frames time-wise stored in the frame memory FM and outputs the motion vector between the MB and the reference image for each MB supplied from the MB generating unit 402 to the subtractor 403. The motion compensating unit 413 supplies a reference image motion compensated by the motion vector found by the motion prediction unit 412 to the subtractor 403 and the contact b of the switch 410 for each MB supplied from the MB generating unit 402 to the subtractor 403.

The variable length encoding unit 414 encodes the quantized DCT coefficient matrix obtained from the quantizer 405 and the motion vectors obtained from the motion prediction unit 412 by variable length encoding, multiplexes it with the various types of control information such as the encoding mode information, and outputs the result as the encoded data. The buffer 415 temporarily stores the encoded data output in this way. The encoded data stored in the buffer 415 is transmitted through the network to the party communicating with the mobile terminal 100.

In the case of usual image communication, the encoding control unit 401 outputs encoding mode information instructing intraframe encoding at a suitable timing and outputs encoding mode information instructing interframe predictive coding at other times. Further, the encoding control unit 401 supervises the amount of encoding of the encoded data not yet transmitted in the buffer 415, adjusts the quantization step Qp so that there is no overflow of the buffer 415 by an increase of the amount of untransmitted encoding, and controls the amount of encoding of the encoded data output to the buffer 415.

On the other hand, when the mobile terminal 100 starts operation for searching for information using the search server 200, the period during which the operation is performed for searching for information and a search operation mode instruction are given to the encoding control unit 401. In this case, the encoding control unit 401 outputs encoding mode information instructing intraframe encoding and performs one frame's worth of intraframe encoding right after a search operation mode instruction is given and switches encoding modes in MB units based on an encoding mode range provided by the encoding control unit 401 for frames up to when the subsequent information search operation ends. Further, the encoding control unit 401 fixes the quantization step Qp to the smallest value, that is, "1", while the search operation mode instruction is being given. Therefore, during this time, encoding is performed by the highest precision.

The above gave details of the configuration of the image encoding unit 102.

The mobile terminal 100 has, in addition to the above explained imaging unit 101 and image encoding unit 102, a unit for searching for information using the search server 200, that is, an initial object region specifying unit 103, a feature descriptor generating unit 104, a search request transmitting unit 105, a search data multiplexing and transmitting unit 106, and a search result display unit 107.

The initial object region specifying unit 103 is a unit allowing the user to specify a region which a search object occupies (initial object region) in a picture of the outside world taken by the imaging unit 101.

Various types of methods may be considered as methods for specifying the initial object region by the initial object region specifying unit 103. For example, there is the following simple method. That is, the initial object region specifying unit 103 displays a picture of the outside world taken by the imaging unit 101 on a display (not shown). Further, the initial object region specifying unit 103 displays for example a square box on the display. The user can operate a predetermined key (for example, cursor key) provided on the mobile terminal 100 to move the display of the square box, adjust the vertical dimension or horizontal dimension of the box, and fit the picture of the search object in the box. Further, the user operates a predetermined key when the search object has been fit into the square box so as to notify the initial object region specifying region 103 of the mobile terminal 100 that an initial object region has been specified. Further, the initial object region specifying unit 103 obtains the occupied position in the image of the square box when receiving the notification as the initial object region of the search object.

In addition, as the method of specifying the initial object region, there is the method of for example using the zoom function of a camera for adjustment so the object fills the entire box and using the box at that time as the initial object region.

The feature descriptor generating unit 104 is supplied with encoded data from the image encoding unit 102 while the search operation mode instruction is being output. Explaining this in more detail, the feature descriptor generating unit 104 is first supplied with the DCT coefficients obtained by intraframe encoding, then is supplied with DCT coefficients, motion vectors, and encoding mode information while the search operation mode instruction is being output. Further, before supplying the intraframe encoded data, the feature descriptor generating unit 104 is notified of the initial object region acquired by the initial object region specifying unit 103. The feature descriptor generating unit 104 generates feature descriptors using DCT coefficients obtained by the intraframe encoding corresponding to the MBs in the initial object region. Further, when interframe predictive encoding is performed, it estimates the occupied region of the search object in the frame based on the motion vectors corresponding to the MBs obtained by the interframe predictive encoding and generates feature descriptors from the DCT coefficients corresponding to the MBs in the estimated occupied region. The feature descriptors include for example representative color descriptors, component color spatial arrangement descriptors, texture descriptors, etc. Note that to avoid duplication of explanation, what these mean will be explained in detail in the section describing the operation of the embodiments.

The feature descriptor generating unit 104 outputs the search control data in addition to the feature descriptors. This is control data automatically generated in the feature descriptor generating unit 104 for an efficient search in accordance with the search object at the search server 200. This search control data will also be explained in detail in the section explaining the operation of the embodiments.

The search request transmitting unit 105 outputs search request data in accordance with an instruction from the user.

The search data multiplexing and transmitting unit 106 multiplexes the search request data output from the search request transmitting unit 105 and the feature descriptors and search control data output from the feature descriptor generating unit 104 and transmits the result through the network 300 to the search server 200.

The search result display unit 107 displays the search result data on a not shown display when search result data is sent back from the search server 200 in response to transmission of search request data etc. from the search data multiplexing and transmitting unit 106.

The above gave details of the configuration of the mobile terminal 100.

Next, the search server 200 will be explained.

The search server 200 has a search data receiving and demultiplexing unit 201, a matching processing unit 202, a search result transmitting unit 203, and a content server A. The search data receiving and demultiplexing unit 201 receives transmitted data from the mobile terminal 100 through the network 300, demultiplexes the transmitted data to feature descriptors, search control data, and search request data, and supplies them to the matching processing unit 202. The matching processing unit 202, by being given the search request data, accesses the content server A or the content server B on the network 300 and searches for information using the feature descriptors as search keys.

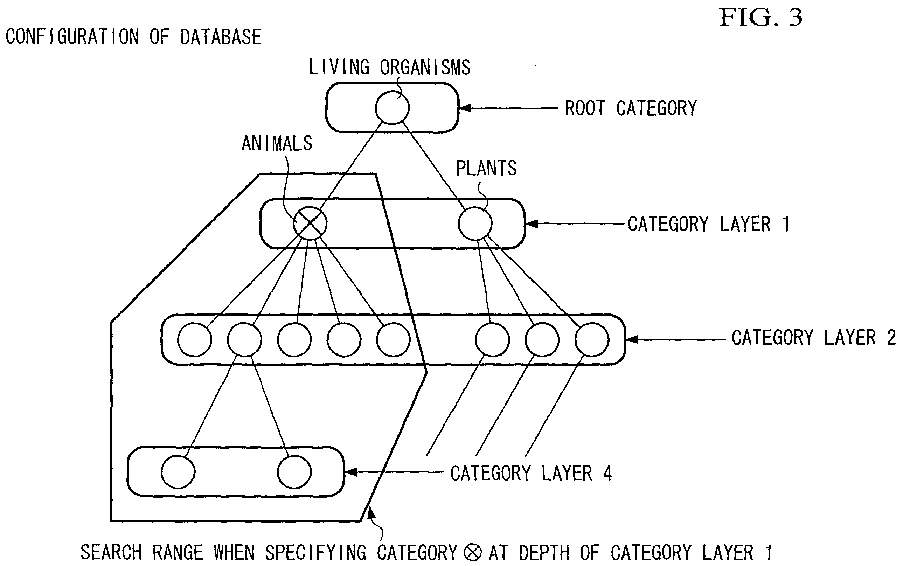

Here, the database of the content server A or content server B is structured hierarchically as illustrated in FIG. 3. If the database is a database of records relating to for example living organisms, the highest root category is for example "living organisms". Category layer 1 under the root category includes for example a category corresponding to "animals" and a category corresponding to "plants". These categories are comprised of records including information relating to animals in general or plants in general. Category layer 2 under category layer 1 is comprised of further subdivided categories of animals or plants. These categories include categories of category layers further under them. The contents of feature descriptors for individual searches are set for the records belonging to the category layers. Here, the records belonging to the higher category layers can be searched for by small numbers of feature descriptors or abstract feature descriptors, but the lower the category layers, the larger the number of feature descriptors or the more concrete and precise the feature descriptors needed for searching for a corresponding record among those belonging to the individual category layers.

The search request data supplied from the mobile terminal 100 side includes information specifying a category as the search range when searching for information. The matching processing unit 200 searches for information matching the feature descriptors in the specified search range. For example, when search request data specifying animals belonging to category layer 1 as the search range is sent from the mobile terminal 100, the matching processing unit searches for records matching the feature descriptors using the lower categories belonging to the category "animals" in FIG. 3 as the search range.

The search result transmitting unit 203 transmits the records retrieved by the matching processing unit 202 as the search result data to the mobile terminal 100.

The above gave details of the configuration of an information search system according to the present embodiment.

### (2) Operation of Embodiment

### [1] Overall Operation

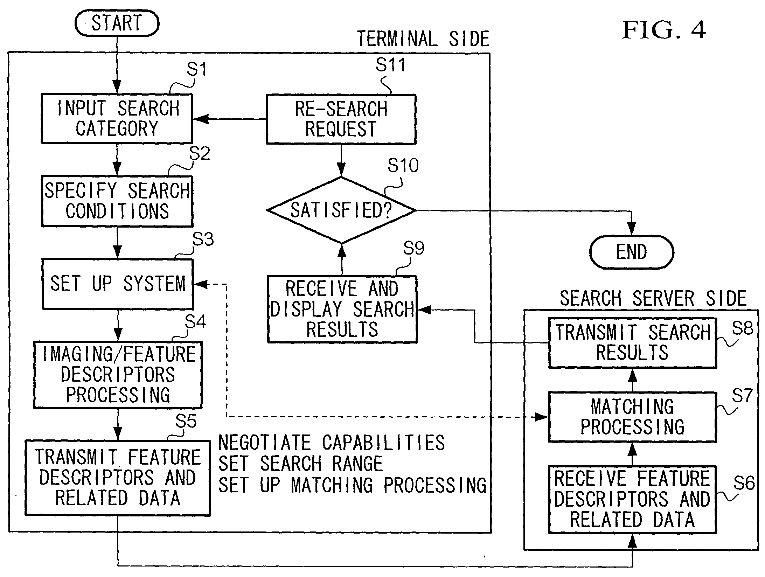

FIG. 4 is a flow chart of the overall operation of an information search system according to the present embodiment. The overall operation of the present embodiment will be explained below with reference to this flow chart. When a user tries to search for information relating to an object in front of it, it inputs what is known about the object in the mobile terminal 100. For example, when knowing that the object before it is a plant, the user inputs information specifying a plant as the search category (step S1).

Next, the user inputs search conditions to the mobile terminal 100 (step S2). The search conditions input at step S2 include for example the following:
a. Description Time
   The description time is the time for generating feature descriptors based on image data obtained from the imaging unit 101. Specifically, the description time is specified by the number of frames of the image for which the feature descriptors are to be generated.
b. Degree of Detail
   The degree of detail is the degree of precision to which the search is to be performed. This degree of detail cannot be directly specified, so instead the frame rate when outputting image data from the imaging unit 101 or the number of feature descriptors used as the search keys are specified.
c. Response Time
   The response time is the time from when the search request data is sent to the search server 200 to when the search result data returns. Note that the response time becomes longer the greater the number of feature descriptors, so it is also possible to specify the number of feature descriptors instead of the reaction time.
d. Amount of Search Result Data
   This is information for specifying how much search result data matching the feature descriptors should be obtained.
e. Synchronous Search/Asynchronous Search
   In the present embodiment, the user of the mobile terminal 100 can enjoy two types of services, that is, a synchronous search and asynchronous search. Here, a "synchronous search" is a search service where the mobile terminal 100 repeatedly generates feature descriptors and sends them to the search server 100 and where the search server 100 repeatedly receives the feature descriptors from the mobile terminal 100, searches for information, and transmits the search result data. On the other hand, an "asynchronous search" is a search service where the feature descriptors generated in a description time specified by the user are assembled and sent from the mobile terminal 100 to the search server 200 and the search server 100 searches for information using the feature descriptors and sends the search result data to the mobile terminal 100. The user specifies which search service among the synchronous search or asynchronous search to receive.
f. Specification of Subjective Significant Feature
   This is an item which the user itself believes is a feature of the search object. For example, when the user considers that the feature of the search object lies in its pattern, the pattern becomes the subjective significant feature specified.

When the above search conditions finish being input, the mobile terminal 100 executes the system setup (step S3). In this system setup, the mobile terminal 100 negotiates with the search server 200. That is, the mobile terminal 100 sends performance exchange information to the search server 200. The performance exchange information includes the types of the feature descriptors able to be provided from the mobile terminal 100 to the search server 200. The search server 200 judges if the mobile terminal 100 can provide the feature descriptors necessary for the information search based on the performance exchange information and sends the result of the judgement to the mobile terminal 100. The result of the judgement includes information indicating which degree of precision the information can be searched for by the feature descriptors able to be provided by the mobile terminal 100. On the other hand, the search server 200 also sends performance exchange information to the mobile terminal 100. The performance exchange information includes information such as the range of the category able to be searched through by the search server 200. The mobile terminal 100 can provide the feature descriptors required for the information search to the search server 200. When confirming that the search server 200 can search for the information requested from the mobile terminal 100, it proceeds to the remaining processing in the system setup. On the other hand, when the mobile terminal 100 cannot provide the search server 200 with the feature descriptors required for the information search or when the search server 200 cannot perform the information search requested by the mobile terminal 100, the mobile terminal 100 displays a message to that effect on the display and stops the processing. When the negotiation ends, the mobile terminal 100 sends the information specifying the search category input at step S 1 from the search data multiplexing and transmitting unit 106 through the network 300 to the search server 200. Due to this, the range of the search is specified at the search server 200 side. Next, the mobile terminal 100 sends the various search conditions input at step S2 from the search data multiplexing and transmitting unit 106 through the network 300 to the search server 200. The search conditions are set in the matching processing unit 202 in the search server 200.

When the system setup explained above ends, imaging and generation of feature descriptors are performed at the mobile terminal 100 (step S4).

Explaining this in more detail, at step S4, the user obtains an image of the search object by the imaging unit 101 of the mobile terminal 100, specifies the initial object region of the search object in the picture shown on the display, and instructs the start of the search to the mobile terminal 100. This instruction is given by pressing a predetermined button arranged on the mobile terminal 100 or another operation.

Inside the mobile terminal 100, a search operation mode instruction is generated by an instruction for start of the search. Here, when a synchronous search is selected at step S2, next a search operation mode instruction is continuously generated until the end of the search is instructed from the user. On the other hand, when an asynchronous search is selected at step S2, a search operation mode instruction is continuously generated until the feature descriptors are extracted from the number of frames of images specified at step S2.

At the image encoding unit 102, encoding is performed under the condition of quantization step Qp = "1" while a search operation mode instruction is being generated. Further, in the image encoding unit 102, the image data of the initial frame right after a search operation mode instruction has been generated is encoded by intraframe encoding, while the image data of the subsequent frames is encoded by interframe predictive encoding accompanied with motion compensation. Further, the DCT coefficients, motion vectors, and encoding mode information generated in the process of encoding are supplied to the feature descriptor generating unit 104. In the feature descriptor generating unit 104, the DCT coefficients, motion vectors, and encoding mode information are used to generate the feature descriptors of the search object. The feature descriptors are generated continuously while the search operation mode instruction is being generated.

Next, the mobile terminal 100 sends the thus generated feature descriptors and search control data from the search data multiplexing and transmitting unit 106 to the search server 200 (step S5). Here, at the time of execution of a synchronous search, the user can input search request data specifying the search category etc. at any time. In this case, the search request data is sent at step S5 to the search server 200 together with the feature descriptors or the search control data. The search control data includes the types of the feature descriptors, the priorities of the feature descriptors at the time of the search, and other information required for control of the search at the search server 200 side. The search control data is automatically generated at the feature descriptor generating unit 104, but the intent of the user is sometimes also reflected. For example, when a subjective significant feature is specified by the user, this is reflected in information relating to the priorities of the feature descriptors in the search control data.

The search server 200 receives the feature descriptors, search control data, and search request data sent from the mobile terminal 100 in this way from the search data receiving and demultiplexing unit 201 (step S6). These feature descriptors, search control data, and search request data are supplied to the matching processing unit 202 in the search server 200.

The matching processing unit 202 then accesses the database in the content server A or B and performs matching processing between the feature descriptors sent from the mobile terminal 100 and the feature descriptors corresponding to the records in the databases within the range of the search category specified from the mobile terminal 100 (step S7). Explaining this in more detail, the contents of the feature descriptors found for the records in the databases are defined. In the matching processing unit 202, the feature descriptors corresponding to the records and the feature descriptors sent from the mobile terminal 100 are compared and contrasted and evaluation values indicating the degree of match of the two are found. The records are selected in order from the one of the highest evaluation value. When a number of records corresponding to the number of search result data sent from the mobile terminal 100 are assembled, the records are sent to the mobile terminal 100 as the search result data (step S8). Specifically, the matching processing by the matching processing unit 202 is performed in accordance with search control data generated by the feature descriptor generating unit 104 of the mobile terminal 100. Note that the specific content of the matching processing will be explained later.

The mobile terminal 100 displays the search result data from the search server 200 on the display when receiving it (step S9).

The user judges if the search result data displayed is what it desires (step S10). When the result of judgement is "YES", the search is ended. On the other hand, when dissatisfied with the search result data displayed, the user requests another search to the mobile terminal 100 (step S11), returns to input of the search category (step S1), and redoes the search.

The above gave a summary of the operation of the present embodiment.

### [2] Example of Imaging and Processing for Generation of Feature Descriptors

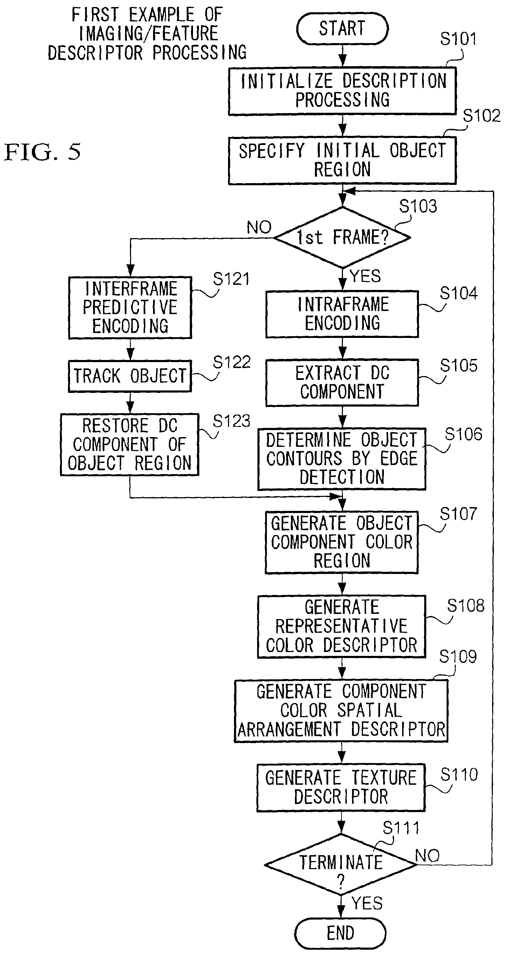

FIG. 5 to FIG. 8 are flow charts illustrating details of the imaging and processing for generating feature descriptors in the present embodiment, that is, the processing of step S4 in FIG. 4. Examples of the processing will be explained below.

### <Example 1>

In the example of processing shown in FIG. 5, first, at the mobile terminal 100, the search conditions input at step S4 etc. of FIG. 4 are given to the image encoding unit 102 and the feature descriptor generating unit 104 (step S101). The search conditions include information relating to the termination condition of for how many frames the feature descriptors should be extracted.

Next, information specifying the initial object region is supplied from the initial object region specifying unit 103 to the feature descriptor generating unit 104 (step S102). Due to this, the image encoding unit 102 starts the encoding of the image data for obtaining the feature descriptors.

First, when receiving the image data from the imaging unit 101, the image encoding unit 102 judges if the image data is the first frame directly after generation of a search operation mode instruction (step S103). Further, when the initial frame of image data, the image encoding unit 102 encodes the image data by intraframe encoding (step S104).

Further, the feature descriptor generating unit 104 fetches the DCT coefficients corresponding to the DC components among those obtained from the quantizer 406 of the image encoding unit 102 in the process of intraframe encoding (step S105).

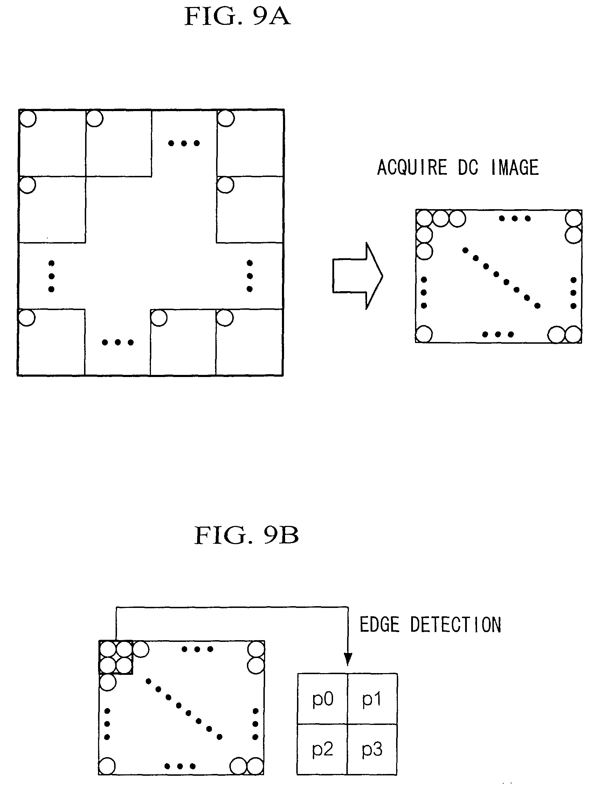

Next, the feature descriptor generating unit 104 determines the contours of the search object based on the DC components obtained at step S105 (step S106). Here, the processing for determination of the contours will be explained with reference to FIGS. 9A and 9B.

First, in the processing of intraframe encoding, a DCT coefficient matrix is found for each 8 x 8 pixel block obtained by dividing a frame. Here, the matrix element of the first row and first column in the DCT coefficient matrix found for each block is the DC component of the image in the block. The feature descriptor generating unit 104, as shown in FIG. 9A, extracts the DC components from the DCT coefficient matrixs obtained for the blocks and assembles these DC components to form a DC image.

Next, the feature descriptor generating unit 104 detects the edges present in the DC image. Specifically, the DC image is divided into two DC component blocks in the horizontal direction and two in the vertical direction. A filter coefficient ftk (k = 0 to 3) for filter detection is multiplied with the four DC components pk (k = 0 to 3) (see FIG. 9B) comprising each block and the results of multiplication are added to find the evaluation value stgt. When the evaluation value stgt exceeds a predetermined threshold, it is judged that there is an edge in the block. Here, it is possible to prepare a plurality of sets of filter coefficients ftk (k = 0 to 3) corresponding to the directions of the edges detected, for example, a horizontal direction edge, vertical direction edge, rightward rising slanted direction edge, and leftward rising slanted direction edge. By finding the evaluation value stgt for each set of these various filter coefficients ftk (k = 0 to 3), it is possible to judge if there are various types of edges in each block.

The feature descriptor generating unit 104 performs such computation and judgement for all of the blocks of the DC image and prepares an edge map showing what kind of edges are where. Further, the feature descriptor generating unit 104 selects from the edge map all of the edges at the inside of the initial object region and closest to the boundary of the initial object region and decides on these edges as the contours of the object.

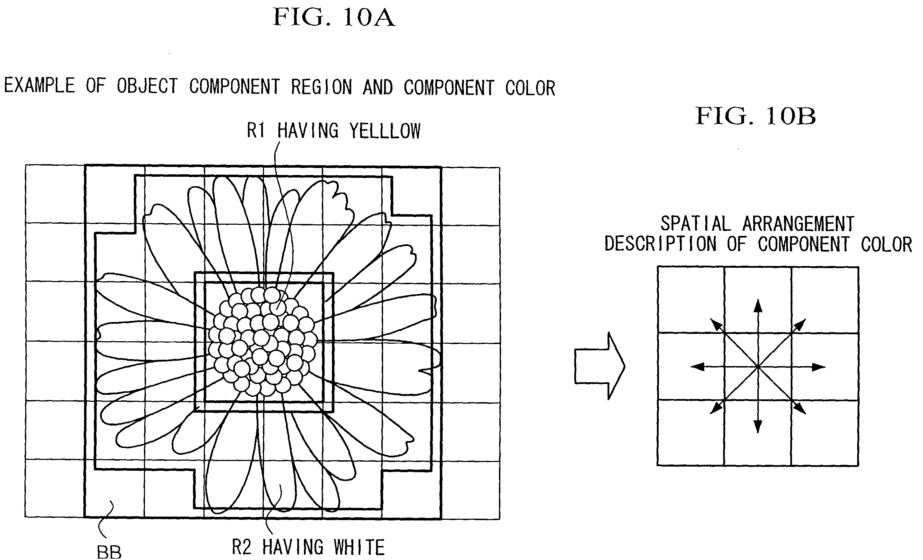

Next, the feature descriptor generating unit 104 executes the processing for generating object component color regions (step S107). Here, the processing for generating object component color regions will be explained with reference to FIG. 10A. FIG. 10A shows an example of a picture taken by the imaging unit 101. The flower in the picture is the search object. BB is the initial object region specified by the user so as to surround the search object, that is, the flower. Regarding the processing for generating the object component color regions, the feature descriptor generating unit 104 performs clustering based on the DC components for the MBs belonging to the initial object region BB and divides the image of the search object into object component regions comprised only of single colors. In the example of FIG. 10A, the MBs are clustered into the object component region R1 comprised of yellow and the object component region R2 comprised of white.

Next, the feature descriptor generating unit 104 prepares representative color descriptors of the following content based on the results of the clustering (step S108).

Representative color descriptor: The search object has the object component regions R1 and R2. The representative color of the object component region R1 is yellow, while the representative color of the object component region R2 is white.

Next, the feature descriptor generating unit 104 performs processing for generating component color spatial arrangement descriptors (step S109). In this processing, information showing the relative spatial arrangement of the object component regions found in the processing for generating the object component color regions is generated. For example, in the case shown in FIG. 10A, at step S109, component color spatial arrangement descriptors indicating that the object component region R1 faces the object component region R2 in the eight surrounding directions as shown by the image in FIG. 10B are generated for the object component region R1.

Next, the feature descriptor generating unit 104 executes processing for generation of texture descriptors (step S110). In this processing, texture descriptors are generated using an edge map found at step S106. That is, in this processing, a histogram is prepared by counting how many of what direction of edges there are in the horizontal direction at different positions in the vertical direction of the initial object region. Further, a histogram is prepared by counting how many of what direction of edges there are in the vertical direction at different positions in the horizontal direction of the initial object region. These histograms are used as the texture descriptors.

Next, it is judged if the condition for terminating the processing for generating the feature descriptors has been satisfied. If result of judgement is "NO", the processing is executed again from step S101.

The above gave details of the processing corresponding to the initial frame after generation of the search operation mode instruction.

Next, the processing corresponding to the second and later frames will be explained.

When the image data of the second and later frames is output from the imaging unit 101, the image encoding unit 102 encodes the image data by interframe predictive encoding (step S121). The feature descriptor generating unit 104 fetches the DCT coefficients corresponding to the DC components out of those obtained in the process of interframe predictive encoding and the motion vectors and encoding mode information corresponding to the MBs obtained from the motion prediction unit 412 from the image encoding unit 102. Further, the object is tracked to estimate the object region which the search object occupies at the present based on the object region of the search object already obtained (in the initial state, the initial object region) and the motion vectors corresponding to the MBs (step S122).

Next, the DC components of the MBs in the object region found in this way are restored (step S123). Here, the DC components of the MBs can be obtained from the image encoding unit 102 in the process of intraframe encoding, but what is obtained from the image encoding unit 102 in the process of interframe predictive encoding is not the DC components of the MBs but the DC components of the differences between the MBs and the corresponding reference images. Therefore, at step S123, the DC components of the MBs in the object region are estimated from the image data of the decoded image generated from the adder 409 of the image encoding unit 102 or the DC components corresponding to the differential images etc.

When step S123 is finished, the already explained steps S107 to S111 are executed to prepare the representative color descriptors, component spatial arrangement descriptors, and texture descriptors corresponding to the second frame.

Next, the generation of the representative color descriptors and other feature descriptors is repeated for each frame until it is judged at step S111 that the termination condition has been satisfied.

At the time of a synchronous search, each time feature descriptors corresponding to a frame is obtained in this way, the feature descriptors are multiplexed with the search control data and search request data and sent to the search server 200. Further, at the search server 200, each time feature descriptors etc. corresponding to a frame is received, a record matching the feature descriptors is searched for and sent to the mobile terminal 100 as search result data.

The user can change the search category etc. while confirming the search result data successively sent in this way so as to narrow down the search range and obtain the desired search result data.

Further, at the time of an asynchronous search, feature descriptors corresponding to the frames are generated for the number of frames set as the description time in advance. These plurality of frames' worth of feature descriptors are sent to the search server 200. Further, in the search server 200, records matching with the group of feature descriptors are searched for, and the search result data is sent to the mobile terminal 100.

According to this asynchronous search, it is possible to obtain an image of the search object from multiple directions, generate a group of feature descriptors expressing multilateral features of the search object seen from a plurality of different perspectives, and search for records matching the group of feature descriptors.

### <Example 2>

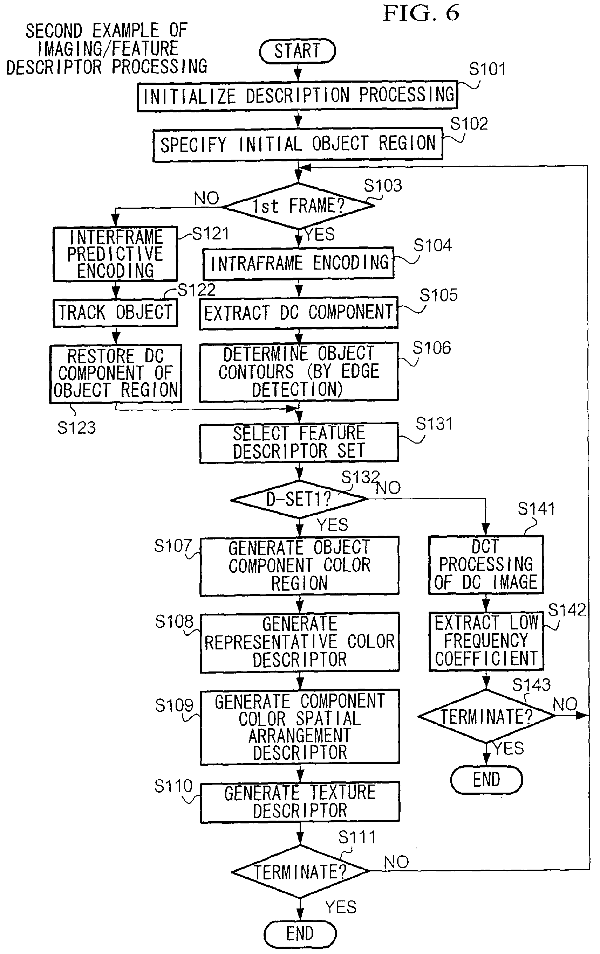

Next, an example of processing shown in FIG. 6 will be explained. Note that in FIG. 6, steps in common with those of FIG. 5 are assigned the same reference numerals and explanations thereof are omitted.

In the example of processing shown in FIG. 6, steps S131 and S132 and steps S141 to S143 are added.

In the example of processing shown in FIG. 5, the types of the plurality of feature descriptors (hereinafter referred to as the "feature descriptor set") generated for the information search were fixed.

As opposed to this, the example of processing shown in FIG. 6 provides two types of feature descriptor sets (hereinafter referred to a "first feature descriptor set" and a "second feature descriptor set"). The user can select either of these.

That is, at step S131, the user is asked which of the first and second feature descriptor sets should be generated. The user makes a selection. Further, at step S132, it is judged which feature descriptor set the user selected.

When the first feature descriptor set is selected, steps S107 to S111 are executed and a first feature descriptor set comprised of representative color descriptors, component color spatial arrangement descriptors, and texture descriptors is generated.

When the second feature descriptor set is selected by the user, the feature descriptor generating unit 104 applies DCT to the DC image comprised of the DC components of the MBs in the object region (step S141) and extracts the DCT coefficients corresponding to the low frequency components among those obtained as a result as the second feature descriptor set (step S142). Further, it judges if the termination condition has been satisfied (step S143) and when the termination condition has not been satisfied, returns to step S103.

According to this example of processing, the user can select the feature descriptor set matching the search object and search for information using it. The selection information showing the selection result of the feature descriptor set is output as the search control data from the feature descriptor generating unit 104, multiplexed with the feature descriptor set, and transmitted to the search server 200 (step S5 of FIG. 4). Further, the selection information is sent as search control data to the matching processing unit 202 in the search server 200. At the matching processing unit 202, the feature descriptor set is judged based on the selection information and matching processing is performed using this feature descriptor set.

The feature descriptor set can be selected automatically as well. For example, it is possible to obtain the edge distribution in the object region at step S106, but when there are a large number of fine edges in the object region in the edge distribution, the second feature descriptor set is selected. The reason is that when there are a large number of fine edges in the object region, it is considered that the features of the object can be described better by using the second feature descriptor set reflecting the features of the overall pattern rather than grasping the object as a set of object component regions comprised mainly of representative colors (first feature descriptor set).

### <Example 3>

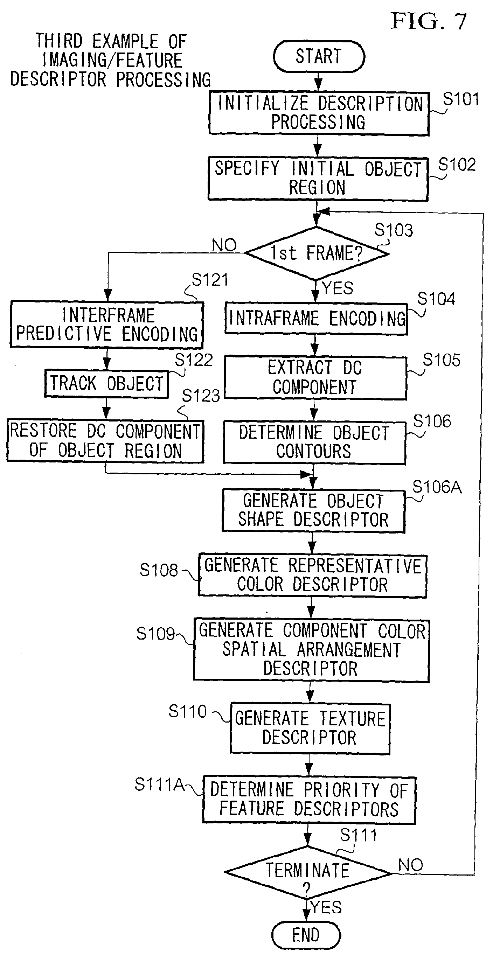

Next, an example of the processing shown in FIG. 7 will be explained. Note that in FIG. 7, steps in common with the steps of FIG. 5 explained above are assigned the same reference numerals and explanations thereof are omitted.

In the example of processing shown in FIG. 6, step S107 is replaced with step S 106A and step S111A is added before step S111.

Here, at step S106A, the shape of the search object is found and object shape descriptors indicating the shape are prepared based on the DC components of the MBs in the object region obtained at step S106 or S123.

On the other hand, at step S111A, the description precisions of the various feature descriptors obtained at steps S106A to S110 are judged. Priorities corresponding to the description precisions are assigned to the feature descriptors. The description precisions can be obtained in the process of generation of the feature descriptors. For example, the clustering for finding the representative color descriptors is executed by repeating the judgement of whether two MBs belong to the same object component region so long as the distance between colors of adjoining MBs is within the allowable range. Here, even in MBs belonging to the same object component region, the two colors do not necessarily have to be the same. Further, the larger the difference of the colors between the MBs included in the same object component region, the more the representative color of the object component region can be said to be inaccurate. Therefore, regarding the representative color descriptors, in the process of generation, the difference of colors between the MBs included in the same object component region can be found and the description precision can be obtained from the results.

The above gave the method of evaluation of the description precision for the representative color descriptors, but it is also possible to evaluate the description precisions for other types of feature descriptors by a suitable method of evaluation. At step S111A, the description precisions of the feature descriptors are found and priorities corresponding to the description precisions are assigned to the feature descriptors.

Here, when the user specifies a subjective significant feature, after priority is assigned based on the description precision, it is also possible to make corrections for improving the priority of the feature descriptors subjectively specified as being a feature by the user.

The priorities of the feature descriptors are sent to the search server 200 as the search control data. The matching processing unit 202 of the search server 200 weights the feature descriptors in accordance with their priorities and then searches for information. Note that the mode of the information search will be explained later.

### <Example 4>

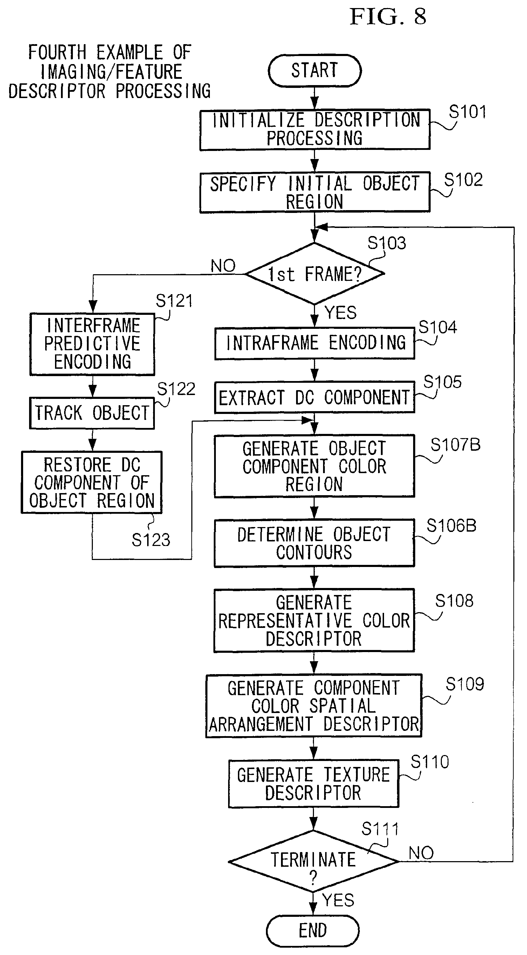

Next, an example of the processing shown in FIG. 8 will be explained. Note that in FIG. 8, steps in common with the steps of FIG. 5 described above are assigned the same reference numerals and explanations thereof are omitted.

In the example of processing of FIG. 5 explained above, the contours of the object are determined (step S106), then the object component color regions are generated (step S107).

As opposed to this, in the example of processing shown in FIG. 8, first the first object component color region is generated (step S107B) after extraction of the DC components. Due to this, a certain degree of color-based region division is obtained. In this case, when there is a portion where two or more different representative colors adjoin each other, that portion has a high possibility of being a boundary of the object. Next, in the example of processing shown in FIG. 8, the distribution of the edges in the rectangular region, that is, the object region, is extracted and combined with the component color based region division result obtained from the processing for generating first object component regions, and the MBs deemed to be the boundaries of the object are determined (step S106B). For example, an MB recognized to have an extremely sharp edge, having at least two different representative colors, and at a position close to a side of the rectangle of the object region is made a boundary of the object.

After the object boundaries are determined, second object component color regions are generated for only the MBs present in the object region. This is refining processing for making the processing for generating the first object component color regions more reliable. The representative color descriptors are generated from the results. The rest of the processing is the same as in FIG. 5.

### [3] Example of Matching Processing

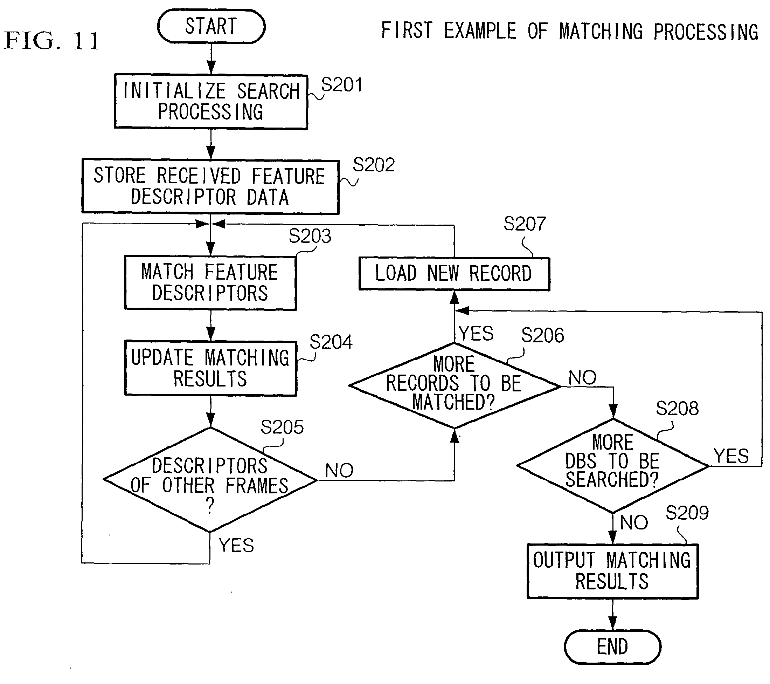

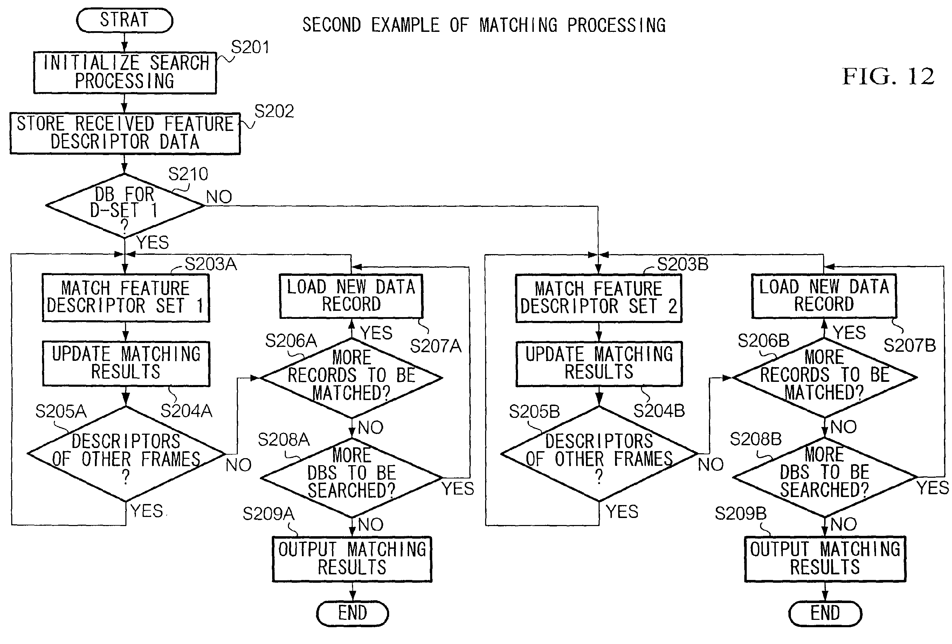

FIG. 11 and FIG. 12 are flow charts of an example of matching processing performed by the matching processing unit 202 of the search server 200. The example of the matching processing will be explained below.

### <Example 1>

In the example of processing shown in FIG. 11, the matching processing unit 202 first initializes the search processing (step S201). The initialization of the search processing corresponds to the system setup in the overall flow of FIG. 4 (step S3). In the initialization of the search processing, the matching processing unit 202 selects the feature descriptor set to be used as the search keys, selects the content server to be searched, sets the number of search steps based on the response time specified by the mobile terminal 100, and sets the search range based on the specification of the search category in accordance with the search control data received from the mobile terminal 100.

Next, the matching processing unit 202 receives and stores the feature descriptors used as the search keys from the mobile terminal 100 (step S202).

Next, the matching processing unit 202 performs the feature descriptor matching processing (step S203). That is, the matching processing unit 202 selects one of the records in the search range in the database, enters the feature descriptor set as a condition for selection of the record and the feature descriptors sent from the mobile terminal 100 in a predetermined evaluation function to evaluate the degree of match of the two feature descriptors and finds evaluation values. Here, there are a plurality of types of feature descriptors. When information specifying their priorities is received from the mobile terminal 100, the evaluation functions are corrected so that a higher evaluation value is given when feature descriptors of a high priority match than when feature descriptors of a low priority match. This correction evaluation function is used for evaluation of the degree of match (step S203).

Next, the matching processing unit 202 performs processing for updating the matching results. In this processing for updating the matching results, up until the number of records having gone through the feature descriptor matching processing of step S202 reaches the number of the search result data, the records are stored in the search result buffer together with evaluation values obtained by the feature descriptor matching processing. Further, when the number of the records stored in the search result buffer reaches the number of search result data, in the subsequent processing for updating the matching results, the evaluation value of a new record obtained by the feature descriptor matching processing and the evaluation values of the records stored in the search result buffer are compared. When the evaluation value of the new record is lower than all of the evaluation values of the records stored in the search result buffer at that point of time, the new record and its evaluation value are ignored. On the other hand, when there is an evaluation value among those of the records stored in the search result buffer lower than the evaluation value of the new record at that point of time, that record and its evaluation value are expelled from the search result buffer and the new record and its evaluation value are stored in the search result buffer in their place.

When the processing for updating the matching results ends, the matching processing unit 202 judges if a feature descriptor of another frame for feature descriptor matching processing is being received from the mobile terminal 100 (step S205).

When the result of judgement of step S205 is "YES", steps S203 and S204 are executed using the feature descriptors corresponding to the frame.

On the other hand, when the result of judgement of step S205 is "NO", it is judged if there is a record for which the feature descriptor matching processing has not yet been finished in the search range (step S206).

When the result of judgement is "YES", that record is read out from the database (step S207) and step S203 to step S205 are executed.

On the other hand, when the result of judgement of step S206 is "NO", it is judged if there is another database to be searched (step S208).

Further, when there is such a database, steps S203 to S207 are executed on that database.

On the other hand, when the result of judgement at step S208 is "NO", the number of records corresponding to the number of search result data stored in the search result buffer is sent from the search result transmitting unit 203 to the mobile terminal 100 (step S209).

The above gave details of the example of matching processing.

### <Example 2>

The example of the matching processing shown in FIG. 12 is an example of processing corresponding to the case where either of a first feature descriptor set or a second feature descriptor set can be selected at the mobile terminal 11 side.

In this example of processing, steps S203A to S209A are matching processing using the first feature descriptor set, while steps S203B to S209B are matching processing using the second feature descriptor set. In both cases, the content of the processing is similar to steps S203 to S209 in FIG. 11.

Further, in this example of processing, at step S210 added after steps S201 and S202, it is judged which of the first or second feature descriptor set has been selected at the mobile terminal 100 side based on the search control data received from the mobile terminal 100. When the first feature descriptor set is selected, steps S203A to S209A are executed, while when the second feature descriptor is selected, steps S203B to S209B are executed.

Above, a first embodiment of the present invention was explained, but persons skilled in the art can made various modifications. For example, the following modification can be considered. That is, in the above embodiment, at the mobile terminal 100, only the first frame was intraframe encoded, but it is also possible to perform intraframe encoding at all times while the search operation mode instruction is being generated. Specifically, in the flow of operation of the mobile terminal 100 shown in FIG. 5, steps S103 and S121 to S123 are deleted. In this case, since the object is not tracked, the user has to adjust the zoom of the camera so that the search object is constantly in the object region, but it is possible to enhance the extraction precision of the DC component, so it becomes possible to enhance the description precision of the feature descriptors and search for information with a high precision.

### B. Second Embodiment

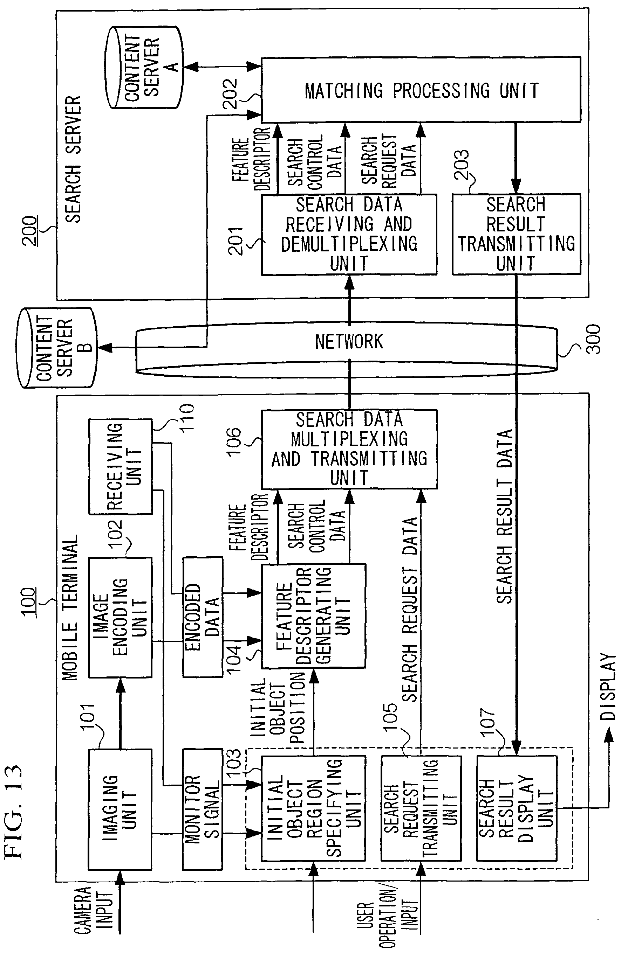

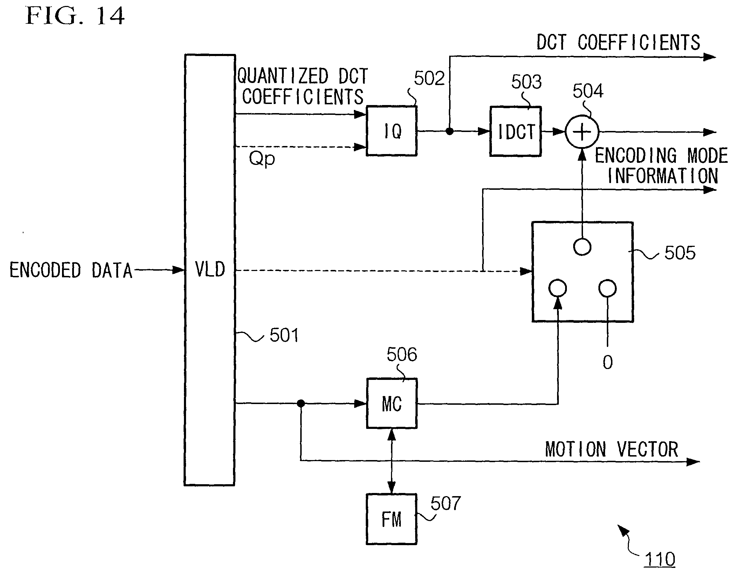

FIG. 13 is a block diagram of the configuration of an information search system according to a second embodiment of the present invention. In this information search system, a receiving unit 110 receiving and demodulating the encoded data of an image from the outside is provided in the mobile terminal 100. FIG. 14 is a block diagram of the configuration of a decoder in the receiving unit 110. The decoder has a variable length decoder 501, an inverse quantizer 502, an inverse DCT unit 503, an adder 504, a switch 505, a motion compensating unit 506, and a frame memory 507.

The intraframe encoded data or the interframe predictive encoded data received through the network is demultiplexed and returned to encoded data before the variable length encoding in the variable length decoder 501.

First, assume that intraframe encoded data has been received and has been given to the variable length decoder 501. The intraframe encoded data output from the variable length decoder 501 at this time includes the quantized data of the DCT coefficients of the blocks making up the frame, the quantization step Qp, and encoding mode information specifying the intraframe encoding mode. The quantized data of the DCT coefficients among these is inversely quantized by the inverse quantizer 502. Further, the DCT coefficients of the blocks are subjected to inverse DCT by the inverse DCT unit 503, whereby the image data of the blocks are restored. At this time, step 505 selects the fixed value "0" and supplies it to the adder 504 in accordance with the encoding mode information corresponding to the intraframe encoding mode. Therefore, the image data output from the inverse DCT unit 503 is sent to the display as the monitor signal through the adder 504 as it is. Further, the image data of the decoded image is stored in the frame memory 507.

Next, assume that interframe predictive encoded data has been received and has been given to the variable length decoder 501. At this time, the interframe predictive encoded data output from the variable length decoder 501 includes the quantized data of the DCT coefficients obtained from the difference of the images of the blocks making up the frame and the reference images, the quantization step Qp, the encoding mode information specifying the interframe predictive encoding mode, and motion vectors corresponding to the macroblocks. Among these, the quantized data of the DCT coefficients are inversely quantized by the inverse quantizer 502. Further, the DCT coefficients of the blocks are subject to inverse DCT by the inverse DCT unit 503, whereby the differences between the images of the blocks and the reference images are restored.

On the other hand, motion vectors corresponding to the macroblocks are supplied to the motion compensating unit 506. When differential information corresponding to the blocks comprising the macroblocks are supplied from the inverse DCT unit 503 to the adder 504, the motion compensating unit 506 refers to the motion vectors corresponding to the macroblocks, finds the position of the reference images corresponding to the macroblocks, reads the image data of the reference images from the frame memory 507, and sends it to the switch 505.

At this time, the switch 505 selects the image data of a reference image and supplies it to the adder 504 in accordance with encoding mode information corresponding to the interframe predictive encoding mode. Therefore, the image data of the reference image is added by the adder 504 with the image data of the differential image output from the inverse DCT unit 503. As a result, the image data of the decoded image is output from the adder 504 and is sent to the display as the monitor signal. Further, the image data of the decoded image is stored in the frame memory 507.

The above gave the operation of the decoder.

The DCT coefficients and motion vectors obtained by the decoder are supplied to the feature descriptor generating unit 104 in addition to being used for the decoding processing explained above.

The user can specify the initial object region by the initial object region specifying unit 103 or can specify various types of search control data to instruct the generation of feature descriptors when the search object is included in a picture shown on the display.

The feature descriptor generating unit 104 generates feature descriptors using the DCT coefficients and motion vector from the decoder of the receiving unit 110 and requests an information search to the search server 200 in accordance with an instruction from the user.

The content of the processing of the feature descriptor generating unit 104 and the content of the processing of the search server 200 are exactly the same as those explained in the first embodiment, so explanations are omitted.

According to the present embodiment, it is possible to search for information on a search object included in not only an image acquired from the outside world by the imaging unit 101, but also an image received through the network.

### C. Third Embodiment

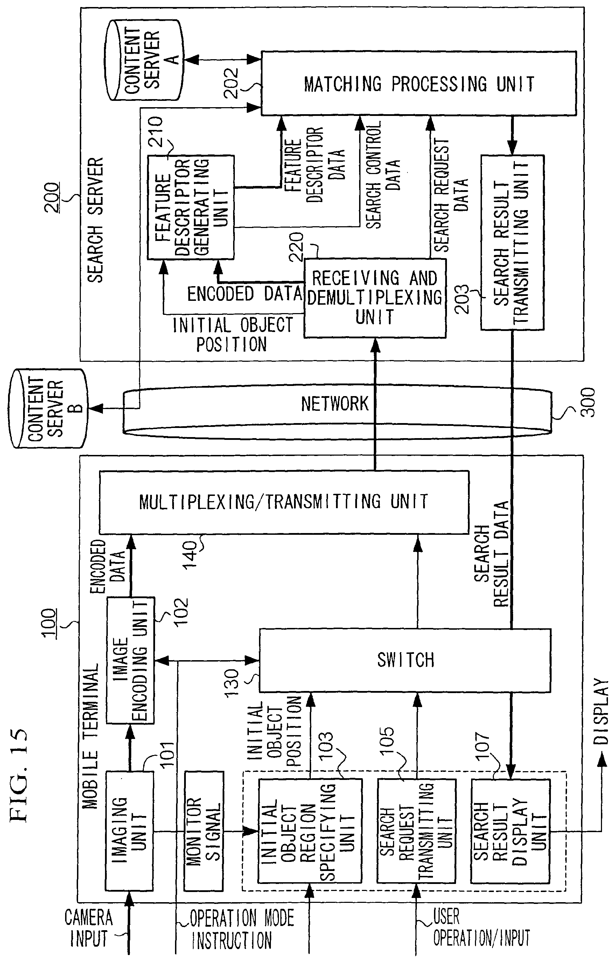

FIG. 15 is a block diagram of the configuration of an information search system according to a third embodiment of the present invention. Compared with the first embodiment, the mobile terminal 100 in the present embodiment does not have the feature descriptor generating unit 104 and search data multiplexing and transmitting unit 106. Instead, it has a switch 130 and multiplexing and transmitting unit 140. Further, the search server 200 in the present embodiment has a receiving and demultiplexing unit 220 instead of the search data receiving and demultiplexing unit 201 and further has a feature descriptor generating unit 210.

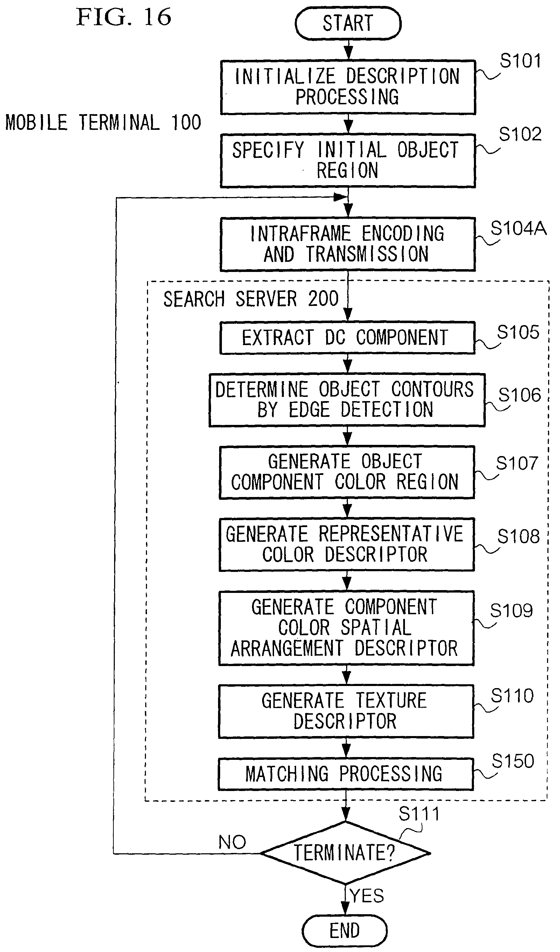

FIG. 16 is a flow chart of the operation of the present embodiment. Note that in this flow chart, steps S101, S102, S104A, and S111 are processings performed at the mobile terminal 100 side, while steps S105 to S110 and S150 are processing performed at the search server 200 side.

First, at the mobile terminal 100, the search conditions input at step S4 of FIG. 4 etc. are given to the image encoding unit 102 (step S101). The search conditions include information relating to the terminating condition of for example for how many frames the feature descriptors should be extracted.

Next, the user fits the image of the search object in the frame of the camera and specifies the initial object region by the initial object region specifying unit 103. The information showing the initial object region is supplied through the switch 130 to the multiplexing and transmitting unit 140 (step S102).

Next, when an operation mode instruction is generated, while the operation mode instruction is being generated, the image encoding unit 102 repeats the intraframe encoding of the image data output from the imaging unit 101 under the condition of quantization step Qp = 1. The encoded data obtained by intraframe encoding is multiplexed with the information indicating the initial object position and transmitted to the search server 200 at a transmission rate within the transmittable rate of the network 300. Further, the user can input search request data including specification of the search category etc. to the mobile terminal 100 at any time. In this case, the search request data is also multiplexed with the encoding data and transmitted to the search server 200.

In the search server 200, the data sent from the mobile terminal 100 side is received and demultiplexed by the receiving and demultiplexing unit 220. The encoded data and the information of the initial object position are sent to the feature descriptor generating unit 210, while the search request data is sent to the matching processing unit 220.

Further, at the feature descriptor generating unit 210, the encoded data and the information of the initial object position are used for executing steps S105 to S110, whereby the feature descriptors required for the information search are generated. Further, search control information including information for prioritizing the feature descriptors is generated at that time. Note that the processing is similar to that performed by the feature descriptor generating unit in the mobile terminal 100 in the present embodiment, so explanations thereof will be omitted.

The feature descriptors and search control information generated by the feature descriptor generating unit 210 are sent to the matching processing unit 202. Further, the matching processing unit 202 performs the matching processing (step S150). The matching processing is also as explained in detail in the first embodiment. Further, the result of the matching processing is sent to the mobile terminal 100 by the search result transmitting unit 203 and shown on the display of the terminal.

In the mobile terminal 100, it is judged if the termination condition has been met or not (step S111). The processing explained above is repeated until the result of judgement is "YES".

In the present embodiment, the encoded data obtained by intraframe encoding is sent from the mobile terminal 100 to the search server 200, so it is not possible to track the object using a motion vector at the search server 200 side. Therefore, the user has to hold an image of the search object in the frame (or box specified as initial object region) at all times.

According to the present embodiment, however, it is not necessary to provide the feature descriptor generating unit or the interface for transmitting the feature descriptors at the mobile terminal 100 side. Therefore, it is sufficient to add basic menu processing for the search information input device and processing for generating an operation mode instruction to the image encoding unit as software to existing mobile terminals in order to obtain the mobile terminal 100 according to the present embodiment.

Further, in the present embodiment, when requesting an information search to the search server 200, it is necessary to send the intraframe encoded data from the mobile terminal 100, but the intraframe encoded data is not used for the display of the image, so it is sufficient to send the data at a rate within the transmittable rate of the network. Therefore, the present embodiment can be worked without increasing the volume of transmission of the network.

Further, if performing high precision intraframe encoding with a quantization step Qp of "1", it is possible to enhance the precision when estimating the DC components of the image and enhance the description precision of the feature descriptors at the search server 200 side.

Note that the following modification may be considered for the present embodiment. That is, at the mobile terminal 100 side, only the first frame is encoded by intraframe encoding at the time of requesting a search. The following frames are encoded by interframe predictive encoding in accordance with need. In this case, at the search server 200 side, it is necessary to add processing for tracking the object region using motion vectors included in the interframe predictive encoded data. At the mobile terminal 100 side, there is no need to continuously specify the object region, so it is possible to lighten the load on the user.

### D. Fourth Embodiment

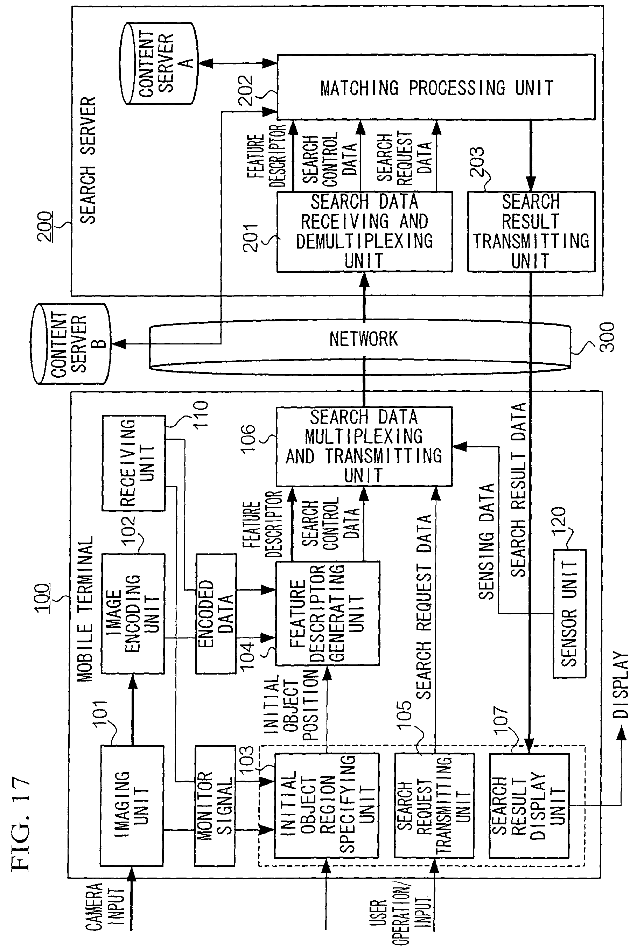

FIG. 17 is a block diagram of the configuration of an information search system according to a fourth embodiment of the present invention. This information search system is an improvement over the second embodiment. The mobile terminal 100 has a sensor unit 120 added to it. In the present embodiment, sensing data obtained by the sensor unit 120 is sent along with the feature descriptors to the search server 200. In the search server 200, the information is searched for using both of the sensing data and the feature descriptors as the search keys.

The sensor unit 120 is for example a GPS (global positioning system) or other position sensor. Of course, it is also possible to adopt a sensor for sensing other information.

When using a position sensor as a sensor unit 120, it becomes possible to search for information including the location of the user in the search keys.

### E. Other Embodiments

### (1) Regarding System Configuration

The terminal for searching for information using a search server may also be a fixed terminal rather than a mobile terminal. Further, in the embodiments explained above, an information search system comprised of a terminal and a search server was mentioned, but it is also possible to configure an information search system of a stand alone type comprised of for example a personal computer plus an imaging unit, an image encoding unit, a feature descriptor generating unit, and a matching processing unit.

### (2) Regarding Search Control

In the above embodiments, the feature descriptor generating unit generated search control data for efficiently proceeding with a search and the matching processing unit performed the matching processing in accordance with the search control data, but it is also possible to proceed with the search efficiently by the flow of information in the opposite direction. For example, a flow of processing of notifying feature descriptors or a feature descriptor set appropriate for the information search in that category from the matching processing unit to the feature descriptor generating unit and having the feature descriptor generating unit generate the feature descriptors or feature descriptor set and send them to the matching processing unit may be considered when the category of the search object is known.

### (3)

The present invention can not only be worked by producing and using the mobile terminal and search server explained above, but also by distributing control programs for causing mobile terminal and search server to operate as in the above embodiments to the users through telecommunications lines or distributing storage media storing such control programs to the users.

## Claims

1. An information search system comprising:
a database linking and storing records relating to various search objects and feature descriptors serving as conditions for selection of the same;
an image acquiring unit for acquiring an image including a search object;
a feature descriptor generating unit for generating a feature descriptor from an image of a search object included in an image acquired by said image acquiring unit; and
a matching processing unit for searching for a record relating to a search object matching a feature descriptor generated by said feature descriptor generating unit from said database.

2. An information search system as set forth in claim 1, further comprising:
a terminal having said image acquiring unit and said feature descriptor generating unit and transmitting a feature descriptor generated by said feature descriptor generating unit through a network; and
a search server provided with said matching processing unit, receiving said feature descriptor from said terminal through said network, searching for a record matching said feature descriptor from said database, and transmitting it to said terminal.

3. An information search system as set forth in claim 1, further comprising:
a terminal having said image acquiring unit and transmitting an image acquired by said image acquiring unit through a network; and
a search server provided with said feature descriptor generating unit and said matching processing unit, receiving an image from said terminal through the network, generating a feature descriptor from said image by said feature feature descriptor generating unit, searching for a record matching said feature descriptor from said database, and transmitting it to said terminal.

4. An information search system as set forth in any one of claims 1 to 3, wherein
said image acquiring unit acquires a plurality of frames of images comprising a moving image and
said feature descriptor generating unit generates a feature descriptor from an image of said search object included in each of the plurality of frames of images.

5. An information search system as set forth in any one of claims 1 to 4, wherein said image acquiring unit is an imaging unit for obtaining an image of the outside world.

6. An information search system as set forth in any one of claims 1 to 4, wherein said image acquiring unit is a receiving unit for receiving an image through a network.

7. An information search system as set forth in claim 2 or 3, wherein said terminal is a mobile terminal.

8. An information search system as set forth in any one of claims 1 to 7, wherein
said feature descriptor generating unit outputs search control data specifying a search condition and
said matching processing unit searches for information in accordance with said search control data.

9. An information search system as set forth in claim 2 or 3, wherein
said terminal is provided with a unit for transmitting search request data specifying a synchronous search or asynchronous search,
said search server searches for information using the feature descriptor as a search key and transmitting data of the result of the search to said terminal each time a feature descriptor corresponding to a frame is obtained when search request data specifying said synchronous search is received, and searches for information using the feature descriptor as a search key and transmitting data of the result of the search to said terminal when a feature descriptor corresponding to a predetermined number of frames is obtained when search request data specifying said asynchronous search is received.

10. An information search system as set forth in claim 2 or 3, wherein
said terminal is provided with a unit for transmitting search request data specifying a search range and
said search server searches for information in the search range specified by said search request data.

11. An information search system as set forth in any one of claims 1 to 10, wherein
said feature descriptor generating unit generates a plurality of types of feature descriptor sets comprised of feature descriptors from an image of a search object and
said matching processing unit searches for a record relating to a search object matching said feature descriptor set from said database.

12. An information search system as set forth in claim 11, wherein said feature descriptor generating unit selects one of the plurality of types of feature descriptor sets, generates the selected feature descriptor set from an image of a search object, and notifies said matching processing unit of feature descriptor set selection information indicating the selected feature descriptor set.

13. An information search system as set forth in any one of claims 1 to 12, wherein
said feature descriptor generating unit generates a plurality of types of feature descriptors and determines priorities of the feature descriptors and
said matching processing unit searches for information using said feature descriptors as search keys in accordance with their priorities.

14. An information search system as set forth in claim 13, wherein said feature descriptor generating unit determines priorities of said feature descriptors in accordance with description precisions of said feature descriptors.

15. An information search system as set forth in claim 13 or 14, wherein said feature descriptor generating unit determines priorities of said feature descriptors based on a specification by a user.

16. An information search system as set forth in any one of claims 1 to 15, wherein said system is further provided with a sensor and
said matching processing unit searches for information using sensing data obtained from said sensor as a search key along with said feature descriptors.

17. An information search system as set forth in claim 16, wherein said sensor is a position sensor outputting sensing data indicating a position of location.

18. An information search system as set forth in any one of claims 1 to 17,
wherein said feature descriptor generating unit negotiates with said matching processing unit to determine a feature descriptor generated from an image of the search object.

19. An information search system as set forth in any one of claims 1 to 18, wherein
said system is further provided with an image encoding unit for encoding an acquired image and
said feature descriptor generating unit generates a feature descriptor from data generated in the process of encoding an image in said image encoding unit.

20. An information search system as set forth in any one of claims 1 to 19,
wherein
said system is further provided with a unit for specifying an object region which a search object occupies in an image acquired by said image acquiring unit,
said image encoding unit performs intraframe encoding on an initial frame and repeatedly performs interframe predictive encoding with motion compensation on subsequent frames when generating a feature descriptor, and
said feature descriptor generating unit generates a feature descriptor corresponding to a search object from data obtained in the process of intraframe encoding and estimates an object region of a search object from a motion vector obtained in the process of interframe predictive encoding and generates a feature descriptor when interframe predictive encoding is performed.

21. An information search system as set forth in any one of claims 1 to 19,
wherein
said system is further provided with a unit for specifying an object region which a search object occupies in an image acquired by said image acquiring unit,
said image encoding unit performs intraframe encoding when generating a feature descriptor, and
said feature descriptor generating unit generates a feature descriptor corresponding to a search object from data obtained in the process of intraframe encoding.

22. A communication terminal comprising:
a communication unit for communicating with a search server in a network; an image acquiring unit for acquiring an image including a search object; a feature descriptor generating unit for generating a feature descriptor from an image of a search object included in the image acquired by the image acquiring unit;
a unit for transmitting the feature descriptor generated by said feature descriptor generating unit to the search server through the communication unit, and receiving a record relating to a search object matching the feature descriptor generated by the feature descriptor generating unit through the communication unit.

23. A communication terminal comprising:
a communication unit for communicating with a search server in a network; an image acquiring unit for acquiring an image including a search object; a feature descriptor generating unit for transmitting performance exchange information which includes types of feature descriptors able to be provided through the communication unit, receiving information relating to search results to be obtained by a search using the feature descriptors from the search server through the communication unit, determining a feature descriptor for information search based on the received information, generating a feature descriptor corresponding to the determined feature descriptor from an image of a search object included in the image acquired by the image acquiring unit; and transmitting the feature descriptor to the search server through the communication unit; and
a unit for receiving a search result from the search server through the communication unit.

24. A search server comprising:
a communication unit for communicating with a communication terminal in a network;
a matching processing unit for receiving performance exchange information which includes types of feature descriptors able to be provided from the communication terminal through the communication unit, transmitting information relating to search results to be obtained by a search using the feature descriptors corresponding to the performance exchange information, and searching for a record relating to a search object matching a feature descriptor when receiving the feature descriptor from the communication terminal through the communication unit; and
a unit for transmitting the record searched to the communication terminal through the communication unit.
